# EUROPEAN PATENT APPLICATION

(11) **EP 2 599 642 A1**
(43) Date of publication of application: **05.06.2013**
(21) Application number: 13000964.0
(22) Date of filing: 07.08.2007
(51) Int. Cl.: B60B 27/00, B21J 5/06, B21K 1/12, F16C 19/18, F16C 33/64

(54) **Bearing unit**

(30) Priority: 07.08.2006 JP 2006214744; 21.08.2006 JP 2006224553; 21.08.2006 JP 2006224554; 23.08.2006 JP 2006226849
(62) Divisional of application: 07792081.7
(71) Applicant: NSK Ltd., Tokyo 141-8560 (JP)
(72) Inventor: Kobayashi, Kazuto, Fujisawa-shi Kanagawa, 251-8501 (JP); Ootsuka, Kiyoshi, Fujisawa-shi Kanagawa, 251-8501 (JP); Wakabayashi, Tatsuo, Fujisawa-shi Kanagawa, 251-8501 (JP); Yasuda, Yuu, Fujisawa-shi Kanagawa, 251-8501 (JP); Nagano, Masato, Fujisawa-shi Kanagawa, 251-8501 (JP); Nagai, Kenichi, Fujisawa-shi Kanagawa, 251-8501 (JP)
(74) Representative: Grünecker, Kinkeldey, Stockmair & Schwanhäusser

(57) **Abstract**

The present relates to a bearing unit comprising a first raceway ring (2) which is mounted on a vehicle body; a second raceway ring (4) which is disposed to face the first raceway ring (2) and is mounted on a wheel; and a plurality of rolling elements (6, 8) which are disposed rollably between raceway surfaces (2s, 4s) which are formed, respectively, on facing surfaces (2n, 4m) of the first and second raceway rings (2, 4), wherein the second raceway ring (4) has a raceway ring member (12) which has a radially projecting flange (12a); and an inner ring (16) which is clamped to an axial end portion (12c) of the raceway ring member (12) so as to be locked on the raceway ring member (12), the flange (12a) is formed monolithically with the raceway ring member (12) by performing a cold forging on a material (20) made of machine structural carbon steel without performing an annealing after the forging, and a hardness of a root portion of the flange (12a) is set higher than a hardness of the axial end portion (12c) of the raceway ring member (12) before clamping.

## Description

### Technical Field

The present invention relates to a bearing unit. In particular, the bearing unit is used for supporting a wheel rotationally on a suspension system. Note that in the description, a wheel denotes generally all wheels such as not only wheels for motor vehicles but also wheels for railway vehicles.

### Background Art

Conventionally, there have been known various types of bearing units for supporting a wheel of a motor vehicle (for example, a disc wheel) rotationally on a vehicle body (for example, a suspension system (a suspension) (for example, refer to Patent Document No. 1). For example, a bearing unit for a drive wheel is shown in Fig. 4, and the bearing unit includes an outer ring (also referred to as a stationary ring, one of raceway rings, and an outside diameter side raceway ring member) 2 which is fixed to the side of the vehicle body and is held in a non-rotating state at all times, a hub (also referred to as a rotational ring, and the other of the raceway rings) 4 which is provided in such a manner as to face an inside of the outer ring 2 and is connected to the side of the wheel in such a manner as to rotate together with the wheel, and double row of rolling elements 6, 8 which are rotationally built in between the outer ring 2 and the hub 4.

In this case, the outer ring 2 is formed into a hollow cylindrical shape and is disposed in such a manner as to cover an outer circumference of the hub 4, seal members (a lip seal 10a on the wheel side, a pack seal 10b on the vehicle body side) are provided between the outer ring 2 and the hub 4 for hermetically sealing off an interior of the bearing unit. In addition, the lip seal 10a is fixed to a wheel-side fixing surface 2n-1 of the outer ring 2 and is positioned slidably relative to a sliding surface 4n-1 of the hub 4, while the pack seal 10b is fixed to a vehicle body-side fixing surface 2n-2 of the outer ring and is positioned slidably relative to an inner ring 16 (also referred to as a rotational ring constituent element), which will be described later. In addition, while balls are illustrated as the rolling elements 6, 8 in the figure, there may be a case where rollers are used depending upon configurations and types of bearing units.

A connecting flange 2a (also referred to as a fixing flange) is molded monolithically on the outer ring 2 in such a manner as to project outwards from an outer circumferential side thereof. Fixing bolts (not shown) are inserted into fixing holes 2b in the fixing flange 2a to be fastened to the vehicle body side, whereby the outer ring 2 can be fixed to a suspension system (a knuckle), not shown. In addition, a substantially cylindrical hub main body 12 (also referred to as the other of the raceway ring members, an inside diameter side raceway ring member and a spindle), which supports, for example, a disk wheel (not shown) of a motor vehicle and rotates together with the disc wheel, is provided on the hub 4, and a mounting flange 12a (also referred to as a hub flange) to which the disc wheel is fixed is provided on the hub main body 12 in such a manner as to project therefrom.

The mounting flange 12a extends outwards (radially outwards of the hub main body 12) beyond the outer ring 2, and a plurality of hub bolts 14 (also referred to as studs) is provided in the vicinity of an extending edge thereof in such a manner as to be disposed at predetermined intervals along a circumferential direction. In this case, by inserting the plurality of hub bolts 14 into bolt holes (not shown) formed in the disc wheel and being fastened with hub nuts (not shown), the disc wheel can be positioned and fixed to the mounting flange 12a. As this occurs, a radial position of the wheel is implemented by a positioning cylindrical portion (also referred to as a pilot portion) which is provided on a wheel side of the hub main body 12 in such a manner as to project therefrom.

In addition, the annular inner ring 16 (which makes up the hub 4 together with the hub main body 12) is fitted on a vehicle body-side fitting surface 4n-2 of the hub main body 12. In this case, after the inner ring 16 is fitted on the fitting surface 4n-2 to a stepped portion 12b formed thereon in such a state that the rolling elements 6, 8 are held with a cage 18, for example, between the outer ring 2 and the hub 4, a clamping area at a vehicle body-side axial end portion of the hub main body 12 is plastically deformed. Then, the clamping area (axial end portion ) 12c is clamped to (is brought into tight contact with) a circumferential end portion 16s of the inner ring 16 therealong, whereby the inner ring can be locked on the hub main body 12.

As this occurs, a state is produced in which a predetermined preload is given to the bearing unit, and in this state, the rolling elements 6, 8 are built in rotationally between the outer ring 2 and the hub 4 so as to be brought into contact with raceway surfaces (outer ring raceway 2s, inner ring raceway 4s) of the outer ring 2 and the hub 4 while forming predetermined contact angles, respectively. In this case, lines of action (not shown) which each connect two contact points intersect the respective raceway surfaces 2s, 4s at right angles while passing through the centers of the rolling elements 6, 8 and intersect each other at one point (a point of action) on a center line of the bearing unit, whereby a back-to-back duplex (DB) bearing is configured.

Note that in the configuration like this, a force acting on the wheel while the motor vehicle is running is all transmitted from the disc wheel to the suspension system via the bearing unit. As this occurs, various types of loads (radial load, axial load, moment load and the like) are caused to act on the bearing unit. However, since the bearing unit is formed into the back-to-back duplex (DB) bearing, high rigidity is maintained with respect to the various types of loads.

In addition, a constant velocity joint (CVJ), not shown, is connected to the bearing unit. Specifically speaking, the constant velocity joint and the bearing unit are connected to each other by bringing an outer ring of the constant velocity joint into abutment with the hub 4 (the clamping area 12c of the hub main body 12) of the bearing unit, causing a spline shaft (not shown) of the constant velocity joint to fit in a spline hole 12h in the hub main body 12 and fixing a leading end of the spline shaft so fitted into the positioning cylindrical portion 12d with a nut (not shown). In this configuration, a driving force of a predetermined torque is transmitted smoothly to the disc wheel via the bearing unit, for example, by a free angular change of the constant velocity joint in association with an angular change of a drive shaft.

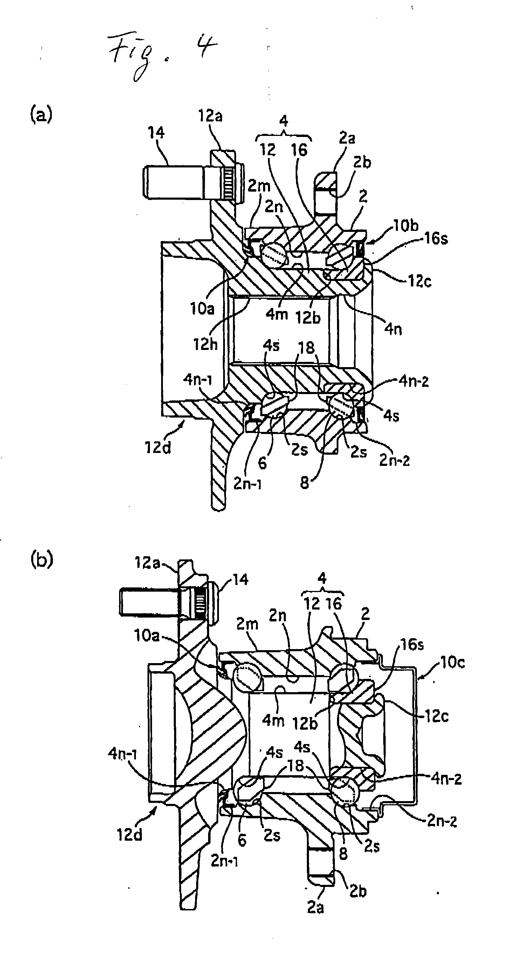

On the other hand, for example, a bearing unit for a driven wheel is shown in Fig. 4(b). In the bearing unit, a spline hole is not provided in a central portion of a hub main body 12. In addition, as seal members for hermetically sealing off an interior of the bearing unit, a cover 10c is provided on the side of a vehicle body in place of the pack seal. The cover 10c is formed into a disc shape so as to hermetically seal off the interior of the bearing unit on the side of the vehicle body from the outside of the bearing unit and is fixed to a fixing surface 2n-2 of an outer ring 2 at a proximal end thereof. Note that since the other configurations of this bearing unit are the same as those of the bearing unit (Fig. 4(a)) for a drive wheel described above, in Fig. 4(b), like reference numerals are given to those like constituent members, and the description thereof will be omitted.

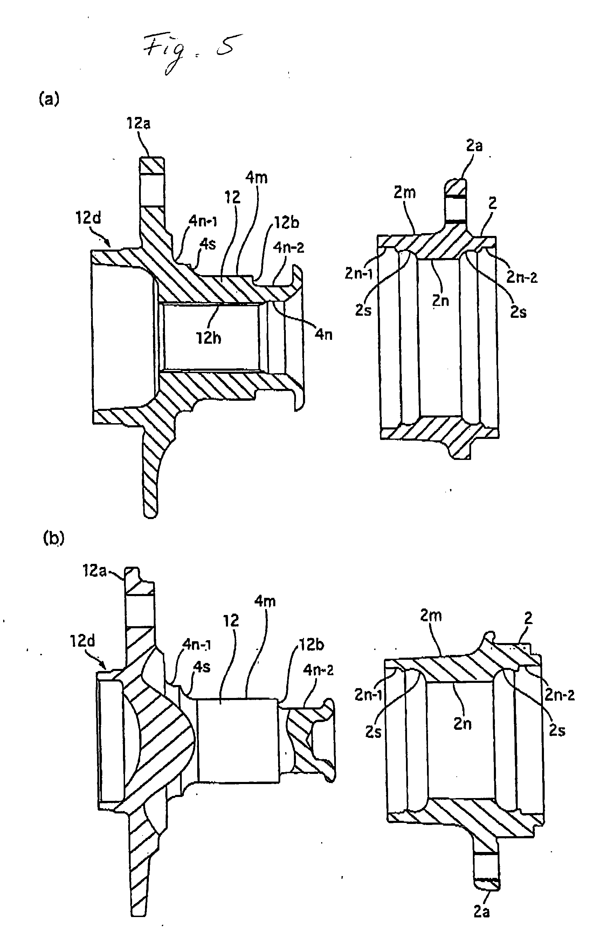

Incidentally, in the bearing units shown in Figs. 4(a) and 4(b), as shown in Figs 5(a) and 5(b), the positioning cylindrical portion 12d is provided on the wheel side of the hub main body 12 which makes up the hub 4, and the mounting flange 12a and the sliding surface 4n-1 of the lip seal 10a, the inner ring raceway 4s and the stepped portion 12b, and the inner ring 16 fitting surface 4n-2 are integrated into the outer circumferential surface 4m of the hub main body 12, whereby the hub main body 12 is formed into the complex configuration.
On the other hand, on the outer ring 2, the connecting flange 2a is integrated into the outer circumferential surface 2m, and the fixing surface 2n-1 of the lip seal 10a or to which the lip seal 10a is fixed and the double row outer ring raceways 2s, and the fixing surface 2n-2 of the seal member (the pack seal 10b in Fig. 4(a), the cover 10c in Fig. 4(b)) or to which the seal member is fixed are integrated into the inner circumferential surface 2n thereof, whereby the outer ring 2 is formed into the complex configuration. In addition, in particular, in the bearing unit for a driving unit in Fig. 4(a), the spline hole 12h is integrated into the inner circumferential surface 4n of the hub main body 12.

Because of this, it has been general practice to form the conventional hub main body 12 through hot forging. In addition, the outer ring 2 is formed into the hollow configuration, and hence, separate punching work becomes necessary for punching out a central portion of a material to form the outer ring 2. In this case, since the processing costs are increased, it has also been general practice to form the conventional ring 2 through hot forging.

It is general in forming the raceway rings 2, 4 through hot forging to obtain final configurations thereof through several steps starting with upsetting a material to punching (trimming) the same, and the material is heated up to about 1100°C before the first step so as to maintain a temperature of A3 transformation point (about 800°C) or higher until the end of the final step. In addition, after the completion of the final step, the material is subjected to slow cooling with a view to preventing the increase in hardness of the material in consideration of mechanical working that will be performed on the material following to the final step. In this case, since oxidation or decarburization is produced on the surface of the material, machining is performed on portions of the material where high dimension accuracy and strength are required.

However, in the machining that is performed on the material, since the surface of the material which is roughened due to the surface being oxidized or decarburized is subjected to chucking (or the material is worked while being grasped by jaws), there occurs a case where the centers of the machined material surface and the hot forged material surface become out of alignment, and there may be caused, for example, a risk that the rotational balance of the hub 4 (the hub main body 12) which is the rotational ring is lost. As this occurs, there may be caused a fear that the rotary performance of the bearing unit becomes difficult to be maintained over a long period of time.

On the other hand, although an increase in thickness of the material to such an extent that nothing is affected by the centers which are out of alignment has been proposed to the outer ring 2 which is the stationary ring, when the proposal is adopted, not only will the material costs be increased but also the weight of the outer ring 2 is increased by the extent that the thickness of the material is so increased. Therefore, it becomes difficult to realize a reduction in overall weight of the bearing unit. In the event that the thickness of the material is increased, the machining allowance for the material when the material is machined is increased, whereby not only is the working time increased but also the working cost is increased, as a result of which the manufacturing cost of the outer ring 2 is increased.

In addition, in slow cooling after hot forging, although the material is maintained in a relatively soft state in consideration of machine working efficiency, in this case, root portions (which are preferably kept hard) of the connecting flange 2a of the outer ring 2 and the mounting flange 12a of the hub main body get soft. When machine working is performed in this state, the connecting flange 2a and the mounting flange 12a are sometimes deformed or inclined due to a pressure applied thereto when machine working is performed thereon. As this occurs, the suspension system (the knuckle) and the disc wheel cannot be fixed accurately and rigidly on the connecting flange 2a and the mounting flange 12a, respectively, as a result of which there is caused a fear that it becomes difficult to stably support the wheel of the motor vehicle on the suspension system.

To avoid this, although the thickness of the root portions of the connecting flange 2a and the mounting flange 12a may be increased to reinforce the root portions, in the event that the thickness is so increased, the overall weight of the bearing unit is increased. Since the bearing unit makes up part of the unsprung load and constitutes a bearing unit which supports the wheel directly, there is caused a fear that the lost of rotation balance and increase in weight of the bearing discussed above are linked up with a reduction in running stability and controllability of the wheel.

In addition, for example, Patent Document No. 2 proposes a technique in which a hub main body 12 is formed by performing cold forging work on a sheet material. According to this technique, the occurrence of oxidation or decarburization on the surface of the forged product can be suppressed, and the finishing accuracy can also be increased. In this case, since there is no need to perform any machining on the material, the conventional problem that the rotation balance of the hub main body 12 is lost becomes difficult to be caused. However, since the hardness of an axial end portion of the hub main body 12 becomes higher than the hardness of a root portion of a mounting flange 12a when the sheet material is subjected to cold forging, clamping work, in which the axial end portion is plastically deformed so as to lock an inner ring 16 on to the hub main body 12, becomes sometimes difficult. In addition, when the sheet material is worked to produce the hub main body 12, it becomes difficult to work the sheet material to project into a brake positioning cylindrical portion or a wheel positioning cylindrical portion, and hence, there has been a need to provide an intermittent pilot on the hub main body as seen in Patent Document No. 2 or to fit a separate pilot on the hub main body.

Then, although the development of a bearing unit is desired which enables the inner ring 16 to be locked on to the hub main body 12 with good efficiency by realizing the facilitation of clamping work, no such bearing unit has ever been made known.

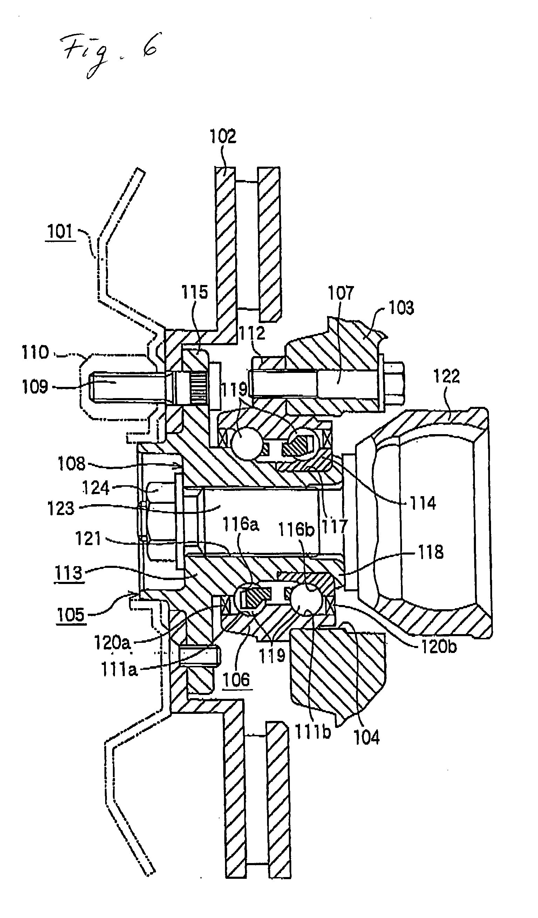

In addition, Fig. 6 shows another bearing unit (also referred to as a wheel supporting hub unit) 105 for a drive wheel. A wheel 101 which makes up a wheel of a motor vehicle and a rotor 102 which is a braking rotary member and which makes up a disc brake which constitutes a brake system are rotatably supported on a knuckle 103 which makes up a suspension system. Namely, an outer ring 106 which makes up a wheel supporting hub unit 105 is fixed into a circular supporting hole 104 portion formed in the knuckle 103 with a plurality of bolts 107. On the other hand, the wheel 101 and the rotor 102 are connected and fixed on to a hub 108 which makes up the wheel supporting hub unit 105 with pluralities of studs 109 and nuts 110. In addition, double row outer ring raceways 111a, 111b and a connecting flange 112 are formed on an inner circumferential surface and an outer circumferential surface of the outer ring 6, respectively. By connecting the connecting flange 112 to the knuckle 103 with the bolts 107, the outer ring 106 is fixed to the knuckle 103.

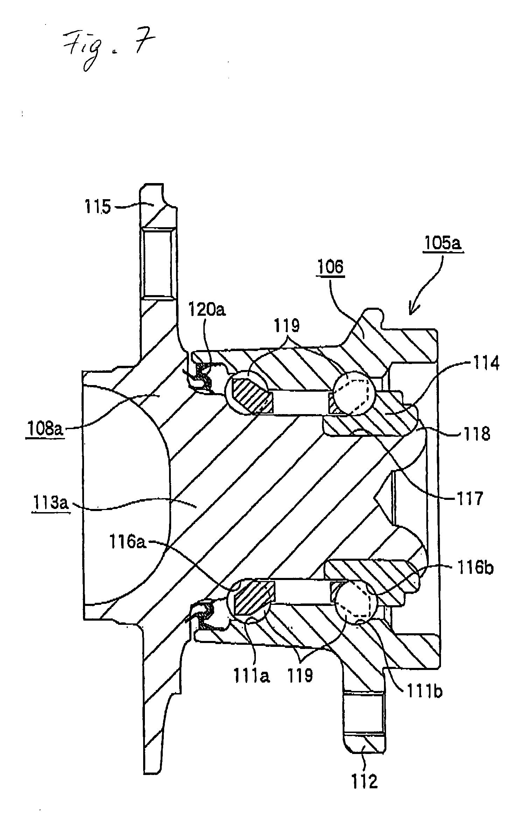

In addition, the hub 108 is made up of a hub main body 113 and an inner ring 114. Of these, a mounting flange 115 is formed on part of an outer circumferential surface of the hub main body 113 in a portion which projects from an outer end opening of the outer ring 106. Note that "out" with respect to the axial direction means the left side of Figs. 6, 7 which is an outer side of the bearing unit in a transverse direction of the vehicle with the bearing unit built on the motor vehicle. On the contrary, the right side of Figs. 6, 7 which is a central side of the bearing unit in the transverse direction of the vehicle with the bearing unit built on the motor vehicle means "in" with respect to the axial direction. The wheel 101 and the rotor 102 are connected and fixed to an outer surface of the mounting flange 115 with the studs 109 and nuts 110.

Additionally, an inner ring raceway 116a, which faces the outside outer ring raceway 111a of the double row outer ring raceways 111a, 111b, is formed on the outer circumferential surface of the hub main body 113 in an intermediate portion. In addition, the inner ring 114 is fitted on a small diameter stepped portion 117 formed similarly on an inner end portion. An inner ring raceway 116b, which faces the inside outer ring raceway 111b of the double row outer ring raceways 111a, 111b, is formed on an outer circumferential surface of the inner ring 114. The inner ring 14 configured like this is fixed to the hub main body 113 by a clamping portion 118 which is formed by plastically deforming the inner end portion of the hub main body 113 radially outwards. In addition, double row rolling elements 119, 119 are provided rollably between the outer ring raceways 111a, 111b and the inner ring raceways 116a, 116b, respectively. Note that while in the illustrated example, balls are used as the rolling elements 119, 119, in the case of an automotive hub unit which is heavy in weight, tapered rollers are sometimes used. In addition, openings at ends of the cylindrical space where the rolling elements 119, 119 are installed are hermetically sealed by seal rings 120a, 120a, respectively.

Furthermore, in the illustrated example, since the bearing unit is the wheel supporting hub unit 105 for the drive wheel (the front wheel of an FF vehicle, a rear wheel of an FR or RR vehicle, any wheel of a 4WD vehicle), a spline hole 121 is formed in a central portion of the hub 108. In addition, a spline shaft 123 which is fixedly provided at an outer end face of a constant velocity joint outer ring 122 is inserted into the spline hole 123. In association with this, a nut 124 is thread fitted on a leading end portion of the spline shaft 123, and then by fastening the nut 124 so fitted, the hub main body 113 is held between the nut 124 and the constant velocity joint outer ring 122.

Next, as a wheel supporting hub unit which has conventionally been known, Fig. 7 shows another hub unit for a driven wheel (a rear wheel of an FF vehicle, a front wheel of an FR vehicle or RR vehicle). Since the wheel supporting hub unit 105a is for a driven wheel, no spline hole is provided in a central portion of a hub main body 113a which makes up a hub 108a. Note that while in the illustrated example, an inner end face of an inner ring 114 is held by a clamping portion 118 provided at an inner end portion of the hub main body 113a, the inner end face of the inner ring 114 can also be held by a nut which is thread fitted on the inner end portion of the hub main body 113a. In this case, an external thread portion, on which the nut is to be thread fitted, is provided at the inner end portion of the hub main body 113a. The construction and function of the other portions are similar to those of the wheel supporting hub unit 105 which has been described before.

Incidentally, in the case of either of the constructions of the wheel supporting hub units 105, 105a which are configured as have been described above, a connecting flange 112 and a mounting flange 115 are formed on an outer circumferential surface of the outer ring 106 and an outer circumferential surface of the hub main body 113, 113a, respectively. As a method for manufacturing the outer ring 106 or the hub main body 113, 113a on the outer circumferential surface of which the connecting flange 112 or the mounting flange 115 is formed in such a manner as to project radially therefrom, cutting is considered in addition to the plastic forming such as hot forging or cold forging.

However, in order to realize a cost reduction by improving working efficiency and securing the yield of material, plastic forming is preferably used. In addition, in the plastic forming, since the hot forging enables work to be worked in a soft state, the forming load is suppressed to a small level. On the contrary, since the extent, to which the metal materials in the constituent components are hardened, is limited (does not surpass such an extent that the hardness increases as the temperature decreases) even after the metal materials are cooled after the completion of working, a sufficient strength may not always be obtained. In addition, since a difference in thermal expansion between forging dies needs to be taken into consideration, it becomes difficult to secure dimension accuracy and shaping accuracy. On the other hand, the strength of the base of the connecting flange 112 formed on the outer circumferential surface of the outer ring 106 or the base of the mounting flange 115 formed on the outer circumferential surface of the hub main body 113a needs to be secured in order to prevent the occurrence of harmful deformation thereat whether or not a moment is exerted thereto when in use. When the outer ring 106 or the hub main body 113, 113a is formed through the hot forging, it becomes difficult to give a required strength to the base of the connecting flange 12a or the mounting flange 115 in the event that the base is left as it is. Because of this, a separate operation needs to be performed in order to increase the strength of the base, this increasing the manufacturing costs of the outer ring 106 or the hub main body 113, 113a.

In addition, with the hot forging, since the dimension accuracy becomes rough and a decarburized layer needs to be removed from the thermally treated portion, a large cutting allowance for a posterior step becomes necessary, and hence, the hot forging approach has had the problem of increased manufacturing costs.

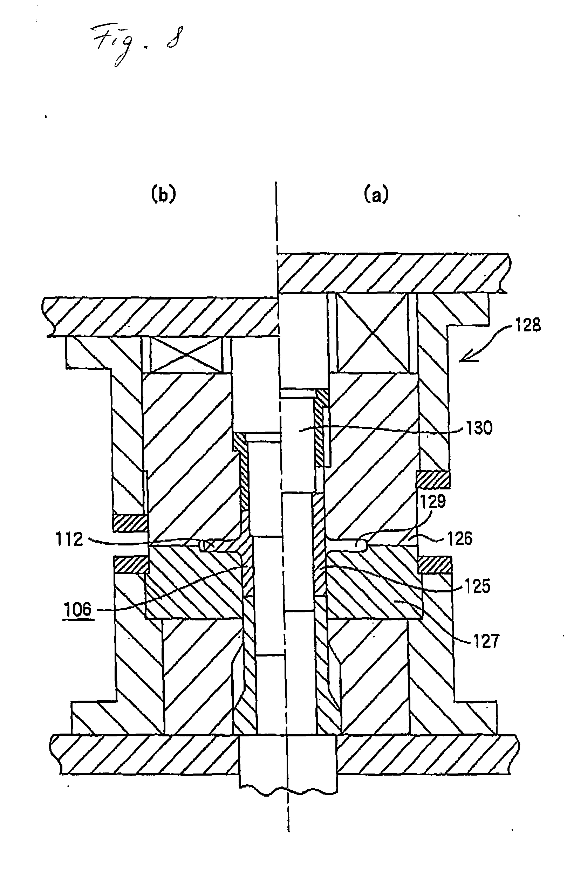

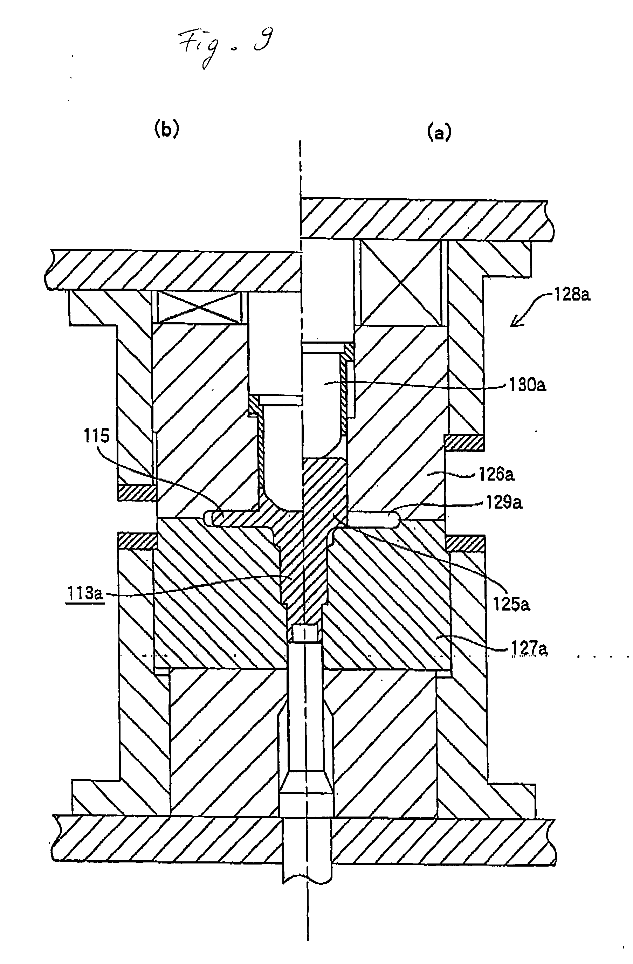

In contrast to this, as is described in Patent Document No. 3, it is considered to manufacture an outer ring 106 or a hub main body 113, 113a having on its own outer circumferential surface a connecting flange 112 or a mounting flange 115 through a side extrusion which is one of cold forging approaches. Figs. 20 to 21 show states in which an outer ring 106 or a hub main body 113a which is a raceway ring member for a bearing unit is manufactured through such a side extrusion as described in Patent Document No. 3. Note that Fig. 8 shows the state in which the outer ring 106 which makes up the wheel supporting rolling element bearings 105, 105a for a drive wheel which are shown in Figs. 6 to 7 is formed and Fig. 9 shows the state in which the hub main body 113a which makes up the wheel supporting rolling element bearing 105a for a driven wheel which is shown in Fig. 7 is formed.

In either of the cases, a material 125, 125a of which an outer circumferential surface is made into a cylindrical surface or a stepped cylindrical surface is set within a mold 128, 128a which is made up of an upper die 126, 126a and a lower die 127, 127a which have inner surface configurations matching an outer surface configuration of the connecting flange 12 or the mounting flange 15. In this state, portions of the outer circumferential surface of the material 125, 125a which exclude a portion where the connecting flange 112 or the mounting flange 115 is to be formed are held. On the other hand, a space 129, 129a which matches the flanges 112, 115 exists around the perimeter of the portion where the connecting flange 112 or the mounting flange 115 is to be formed. In the event that the material 125, 125a is pressed axially (the axial dimension is contracted) by a punch 130, 130a in this state, the metal material which has then nowhere to escape as the axial dimension shortens is pushed into the space 129, 129a, whereby the connecting flange 112 or the mounting flange 115 is eventually formed on part of the outer circumferential surface.

In the event that the outer ring 106 or the hub main body 113a which includes the connecting flange 112 or the mounting flange 115 is manufactured through the side extrusion that has been described above, the strength of the base of the connecting flange 112 or the mounting flange 115 which is formed on the outer circumferential surface of the outer ring 106 or the hub main body 113a can be increased. Namely, since the connecting flange 112 or the mounting flange 115 including the base is work hardened, the necessity of a posterior treatment to increase the strength of the base is obviated, or even though such a posterior treatment is necessary, a simple posterior treatment will suffice, and hence, a reduction in manufacturing costs of the outer ring 106 or the hub main body 113a is realized. In addition, since the difference in thermal expansion between the forging dies does not have to be taken into consideration, the dimension accuracy and shaping accuracy are easy to be secured, and the posterior working can be simplified or omitted, thereby making it possible to realize the reduction in manufacturing costs from this aspect.

However, in order to increase further the strength of the base of the connecting flange 112 or the mounting flange 115 with a view to realizing a reduction in weight or the like, there still remains a room for improvement even with the manufacturing method described in Patent Document No. 3 that has been described above. Namely, as is widely known in the field of automotive technologies, in order to realize an increase in driving performance centered at riding comfort, steering stability and the like or fuel economy, it is effective to reduce the so-called unsprung load which is the weight of the members which lie closer to the road surface than the spring which makes up the suspension system. Needless to say, the outer ring 106 or the hub main body 113a which includes the connecting flange 112 or the mounting flange 115 constitutes the unsprung load, and reducing the weight of the outer ring 106 or the hub main body 113a (as well as the hub main body 113) even slightly becomes very advantageous from the viewpoint of increasing the aforesaid performances.

In order to enable a reduction in thickness of the connecting flange 112 or the mounting flange 115 with a view to reducing the weight of the outer ring 106 or the hub main body 113, 113a, it becomes advantageous to increase the strength of the connecting flange 112 or the mounting flange 115, in particular, the strength of the base to which a large moment is exerted while the vehicle is turning. From this viewpoint, the manufacturing method described in Patent Document No. 3 above still has the room for improvement.

In addition, in the case of a bearing unit of this type, a wheel mounting surface of the connecting flange 12 or a vehicle body mounting surface of the mounting flange 115 needs to be finished with good flatness accuracy in order to secure runout accuracy. In the related art disclosed in Patent Document No. 3, finishing the mounting surface with good flatness accuracy is designed to be implemented by cutting.
However, when attempting to finish the mounting surface by cutting, since conventionally, the whole area of the mounting surface of the mounting flange 112 or the connecting flange 115 was such as to be brought into abutment with the wheel or the vehicle body, the whole area of the mounting surface needed to be cut. Consequently, a problem has still remained that should be solved with respect to the manufacturing costs of the flanged raceway ring member (time related manufacturing costs or labor-hour related manufacturing costs).

Patent Document No. 1: Japanese Patent Unexamined Publication JP-A-2005-256897
Patent Document No. 2: Japanese Patent Unexamined Publication JP-A-2003-25803
Patent Document No. 3: Japanese Patent Unexamined Publication JP-A-2006-111070

### Disclosure of the Invention

### Problem that the Invention is to Solve

The invention has been made in view of the situations, and an object thereof is to provide a bearing unit which can lock an inner ring on the other raceway ring with good efficiency by realizing the facilitation of clamping work.

### Means for Solving the Problem

According to the invention, there is provided a bearing unit including:
one raceway ring which is mounted on a vehicle body;
the other raceway ring which is disposed to face the one raceway ring and is mounted on a wheel; and
a plurality of rolling elements which are disposed rollably between raceway surfaces which are formed, respectively, on facing surfaces of both the raceway rings, wherein
the other raceway ring has:
   the other raceway ring member which has a radially projecting flange; and
   an inner ring which is clamped to an axial end portion of the raceway ring member so as to be locked on the raceway ring member,
the flange is formed monolithically with the other raceway ring member by performing a cold forging on a material made of machine structural carbon steel without performing an annealing after the forging and
a hardness of a root portion of the flange is set higher than a hardness of the axial end portion of the other raceway ring member before clamping.

In addition, according to a preferred embodiment of the invention defined in claim 2, there is provided a bearing unit, wherein
the hardness of the root portion of the flange is set higher by Vickers hardness HV50 or more than the hardness of the axial end portion of the other raceway ring member before clamping.
Furthermore according to a preferred embodiment of the invention defined in claim 3, there is provided a bearing unit, wherein
the axial end portion of the other raceway ring member is formed monolithically by diametrically shrinking or expanding the material through cold closed forging, and
the flange is formed monolithically by extruding the material sideways through cold closed forging.

### Advantage of the Invention

According to the invention, the bearing unit can be realized which can allow the inner ring to be locked on the other raceway ring member with good efficiency by realizing the facilitation of the clamping work.

### Brief Description of the Drawings

[Fig. 1] (a) is a sectional view of a hub main body (the other raceway ring member) of a drive wheel which is cold closed die forged, and (b) is a sectional view of a hub main body (the other raceway ring member) of a driven wheel which is cold closed die forged.
[Fig. 2] A drawing showing a process for cold closed forging a driven wheel hub main body, of which (a) is a step of preparing a billet , (b) and (c) are drawing steps, (d) is a side extrusion step, and (e) is a side extrusion finalizing step.
[Fig. 3] A drawing showing the configuration of a bearing unit of second and half generation, of which (a) is a sectional view of a bearing unit for a drive wheel, and (b) is a sectional view of a bearing unit for a driven wheel.
[Fig. 4] (a) is a sectional view showing the configuration of a bearing unit for a drive wheel, and (b) is a sectional view showing the configuration of a bearing unit for a driven wheel.
[Fig. 5] (a) is a sectional view showing a hub for a drive wheel and one of raceway rings in an exploded fashion, and (b) is a sectional view showing a hub for a driven wheel and one of raceway rings in an exploded fashion.
[Fig. 6] A sectional view showing another example of a wheel supporting hub unit for a drive wheel with the hub unit assembled on a knuckle.
[Fig. 7] A sectional view showing another example of a wheel supporting hub unit for a driven wheel with the hub unit assembled on a knuckle.
[Fig. 8] A sectional view showing a state in which an outer ring which makes up a wheel supporting bearing unit is manufactured by a conventionally known side extrusion process by a state immediately before the start of the process and a state immediately after the completion of the process.
[Fig. 9] A sectional view showing a state in which a hub main body which makes up a wheel supporting bearing unit for a driven wheel is manufactured by a conventionally known side extrusion process by a state immediately before the start of the process and a state immediately after the completion of the process.

### Description of Reference Numerals

2, 106 outer ring (one of raceway rings, outside diameter side raceway ring member);
2a, 112 connecting flange;
2s, 111a, 111b outer ring raceway;
4, 108, 108a hub (the other raceway ring);
4s, 116a, 116b inner ring raceway;
6, 8, 119 rolling element;
12, 113, 113a hub main body (the other raceway ring member, inside diameter side raceway ring member);
12a, 115 mounting flange;
12c axial end portion (clamping area) of the other raceway ring member;
101 wheel;
102 rotor;
103 knuckle;
104 supporting hole;
105, 105a wheel supporting hub unit;
107 bolt;
109, 202g stud (bolt);
110 nut;
114 inner ring;
117 small diameter stepped portion;
118 clamping portion;
120a, 120b seal ring;
121 spline hole;
122 constant velocity joint outer ring;
123 spline shaft;
124 nut;
125, 125a material;
126, 126a upper die;
127, 127a lower die;
128, 128a mold;
129, 129a space;
130, 130a punch;

### Best Mode for Carrying out the Invention

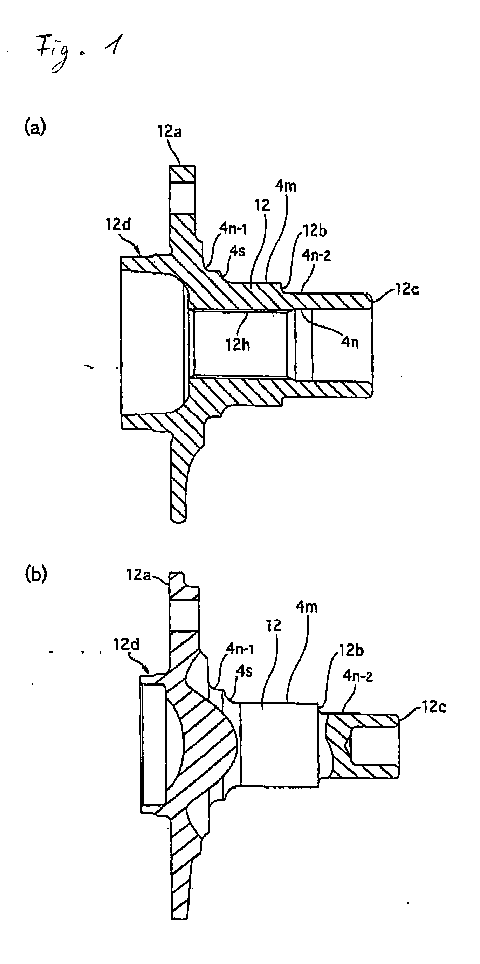

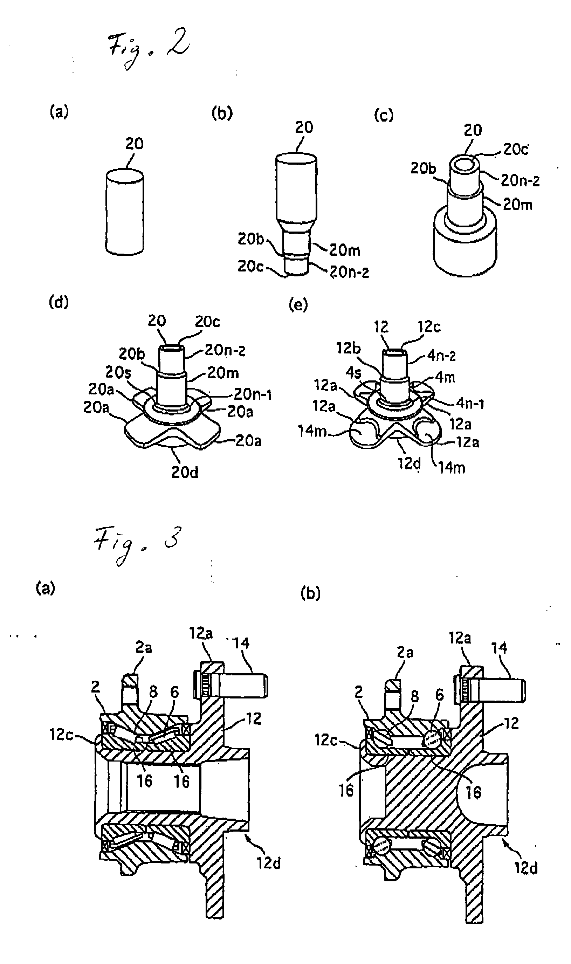

A bearing unit according to one embodiment of the invention will be described by reference to Figs. 1 and 3. Note that since the bearing unit of the embodiment is also an improvement on the bearing unit shown Figs. 4(a), (b), only different configurations will be described below, while omitting the description of like configurations will.

In the bearing unit shown in Figs. 4(a) and 4(b), in order to increase the strength of the rood portion of the mounting flange 12a to some extent, the hub main body 12 is set to substantially the constant hardness on the whole, and hence, the clamping area (the axial end portion) 12 of the hub main body 12 is made difficult to be deformed plastically.

Then, in the bearing unit of this embodiment, a clamping area 12c (Figs. 1(a) and 1(b)) on an axial end portion of a hub main body (the other raceway ring member) 12 is made easy to be deformed plastically, so that an inner ring 16 can be locked on the hub main body 12 with good efficiency by clamping (bringing into tight contact) the clamping area 12c along a circumferential end portion 16s of the inner ring 16.

To realize such a configuration, the hub main body 12 may be worked through cold closed forging so that a root portion of a mounting flange 12a where a higher rotational bending strength is required is maintained relatively hard, while a relative softness is maintained in the clamping area 12c of the hub main body 12 where clamping is applied.

Here, a process for forming the hub main body 12 through cold closed forging will be described by reference to Fig. 2.
Firstly, as shown in Fig. 2(a), as a material for forming the hub main body 12, a cylindrical billet 20 made of a machine structural carbon steel (JISG4051) is prepared into which the material is spheroidized. Note that while the billet 20 is a solid material here because the hub main body 12 (Fig. 1(b)) for a driven wheel is considered, in the case of the hub main body 12 for a drive wheel (Fig. 1(a)), a hollow billet (not shown) may only have to be prepared.

Next, as shown in Figs. 2(b) and 2(c), a portion 20m which is to constitute an outer circumferential surface 4m of the hub main body 12 and a portion 20n-2 which is to constitute a fitting surface 4n-2 on which an outer ring 16 is fitted are formed monolithically by, for example, drawing the billet 20 through cold closed forging. At the same time as this occurs, a portion 20b which is to constitute a stepped portion 12b may be formed monolithically between both the portions 20m, 20n-2.

In addition, in the drawing process, a portion 20c which is to constitute a clamping area 12c of the hub main body 12 is formed monolithically at the same time. In this case, the billet is diametrically contracted or diametrically expanded through cold closed forging in the portion 20c. The portion 20c which is to constitute the clamping area 12c can be held relatively soft by performing such a diametrically shrinking or diametrically expanding process on to the portion concerned.

To describe specifically, in the hub main bodies 12 (Figs. 1(a) and 1(b)) for drive and driven wheels, the portion 20c which is constitute the clamping area 12c is diametrically contracted or diametrically expanded, the portion can be thinned by such an extent, whereby the hardness in the portion 20c concerned can be weakened. Since the extent to which the portion is diametrically contracted or diametrically expanded is set depending on, for example, the configuration and/or size of the hub main body 12, the magnitude of clamping force exerted on to the portion 20c concerned and the like, no specific numerical limit value is given here.

Following this, as shown in Fig. 2(d), a portion 20s which is to constitute an inner ring raceway 4s, a portion 20n-1 which is to constitute a sliding surface 4n-1 of a lip seal 10a or on which the lip seal 10a slides, and a portion 20a which is to constitute a mounting flange 12a are formed monolithically by side extruding the billet 20 through cold closed forging. As this occurs, a portion 20d which is to constitute a positioning cylindrical portion 12d is also formed monolithically in such a manner as to continue along a circumferential direction at the same time as the portion 20a which is to constitute the mounting flange 12a is formed.

According to the side extrusion through cold closed forging like this, the hardness of the portion (including the rood portion) 20a which is to constitute the mounting flange 12a becomes harder than the portion 20c which is to constitute the clamping portion 12c of the hub main body 12. This is a result from a difference in hardening produced in the billet 20.

Here, the results of a test carried out with respect to difference in work hardening will be described.
Firstly, for example, a machine structural carbon steel containing 0.50 to 0.56% of carbon was spheroidized so as to prepare a billet (material) whose hardness was adjusted to Vickers hardness HV160. Then, cold closed forging was applied to the material to form a hub main body. In this case, the hardness of a clamping area was HV200, while the hardness of a mounting flange (including a root portion thereof) was HV250 or higher, producing a difference in hardness of HV50 to 100.

When converting the difference in hardness (HV50 to 100) into a difference in tensile strength based on strength of materials, the resulting difference in tensile strength becomes about 17 to 33kgf/mm², and the result was obtained which exhibited that the strength (hardness) of the mounting flange (including the root portion thereof) was increased over the clamping area.

In addition, as shown in Fig. 2(e), when the side extrusion through cold closed forging is completed, a product which is formed into the same configuration as the hub main body 12 shown in Fig. 1(b) can be completed with high accuracy. In this case, the overall configuration of the hub main body 12 which includes the side extruded mounting flange 12a takes a star shape.

Note that while in a normal forging process, annealing is performed after the hub main body 12 is finished, annealing is a process for removing residouble row stress and reducing the hardness by changing the mechanical properties of a material. However, in the embodiment, due to the necessity of maintaining the hardness difference of HV50 to 100 between the clamping area 2c and the mounting flange 12a (including the root portion thereof), no annealing can be performed after cold closed forging.

Consequently, the hardness of the billet 20 needs to be set in consideration of a residouble row hardness in the clamping area which is desired to be maintained after cold closed forging. In this case, since the residouble row hardness of the clamping area 12c can be set arbitrarily in relation to, for example, a clamping force exerted on the clamping area 12c and the hardness of the mounting flange 12a (including the root portion thereof), no specific numerical limit value is given here.

Thus, according to the embodiment, the hardness of the mounting flange 12a (including the root portion thereof) can be set higher than the hardness of the clamping area 12c of the hub main body 12. Namely, the hardness of the mounting flange 12a (including the root portion thereof) can be set Vickers hardness HV50 or more higher than the hardness of the clamping area 12c of the hub main body 12 before clamping.

In addition, as shown in Figs. 4(a) and 4(b), the outer ring 2 is disposed on the finished hub main body 12 in such a manner as to face the hub main body 12, and a plurality of rolling elements 6, 8 and seal members are assembled thereon. After the inner ring 16 is fitted in the hub main body 12, a clamping is applied to the clamping area 12c. In this case, the hardness of the clamping area 12c of the hub main body 12 before clamping is maintained softer than the mounting flange 12a (including the root portion thereof). Because of this, the clamping area 12c can easily be clamped (brought into tight contact) along the circumferential end portion 16s of the inner ring 16. The inner ring 16 can be locked on the hub main body 12 with good efficiency.

In addition, according to the hub main body 12 of the embodiment, no machining is given to a surface (including a bolt seat surface 14m on which a hub bolt 14 is to be seated) of the mounting flange 12a and the positioning cylindrical portion 12d, and they can be used as they are. Because of this, no conventional eccenricity occurs in which the centers of the mounting flange and the positioning cylindrical portion become out of alignment, whereby for example, the rotation balance of the hub 4 (the hub main body 12) is lost. By this, a constant rotation performance of the bearing unit can be maintained over a long period of time.

In addition, by forming the mounting flange 12a by side extrusion, the positioning cylindrical portion 12d which continues in the circumferential direction can be formed monolithically in a simple and quick fashion, whereby since the manufacturing efficiency of the hub main body 12 can be increased, a reduction in manufacturing costs can be realized.

Furthermore, since the strength of the root portion of the mounting flange 12a can be increased, a reduction in thickness of the root portion can be realized, and a reduction in weight of the hub main body 12 can be realized by such an extent that the thickness is reduced, whereby since the unsprung load can be reduced, the running stability and controllability of the wheel can be increased.

In addition, in the finished article (the hub main body 12) shown in Fig. 2(e), a heat treatment and grinding are preferably given to the sliding surface 4n-1 on which the lip seal 10a slides, the inner ring raceway 4s and the fitting surface 4n-2 on which the inner ring 16 fits. In this case, a quenching and tempering treatment through electromagnetic induction may be applied to an area extending from the sliding surface 4n-1 to the inner ring 16 fitting surface 4n-2 via the inner ring raceway 4s and a stepped portion 12b of the outer circumferential surface 4m.

Here, in the heating process through electromagnetic induction, for example, when a high-frequency current is caused to flow through a coil to produce a high-frequency magnetic flux around the coil in such a state that the finished article (the hub main body 12) disposed in the coil, the finished article (the hub main body 12) can be heated by the action of induction then. As this occurs, the portion so heated is quenched by a cooling agent (for example, water), whereby quenching is given. Following this, the finished article (the hub main body 12) is heated and thereafter is cooled, whereby tempering is given.

In the quenching and tempering process using electromagnetic induction, the finished article (the hub main body 12) can be uniformly quench hardened. In particular, in the hub main body 12 (Fig. 1(a)) for a drive wheel which is formed of a hollow billet (not shown), since a difference in thickness between portions of the hub main body 12 becomes relatively small, the heat capacities of the portions become constant. Because of this, the depth to which quench hardening is attained is stabilized, thereby making it possible to secure a uniform strength over the whole of the hub main body 12.

In addition, as materials for cold forging the outer ring 2 and the hub main body 12, for example, pipe stock or sheet stock may be used in addition to the billet stock made of machine structural carbon steel.
Additionally, while in the embodiment, nothing is mentioned about the hardness of the area on the hub main body 12 between the clamping area 12c and the mounting flange 12a (including the root portion thereof), there is no need to maintain the hardness difference of HV50 to 100 between the two portions after clamping, and hence, any hardness may be adopted for the area concerned. For example, a hardness difference equal to or smaller than the hardness difference may be adopted, or the hardness difference may become zero.

In addition, while in the embodiment, the bearing unit of third generation is considered, the invention is not limited thereto, and hence, for example, the invention can be applied to a bearing unit of second and half generation shown in Figs. 3(a) and 3(b). Fig. 3(a) shows a bearing unit for a drive wheel, and Fig. 3(b) shows a bearing unit for a driven wheel. In this case, while the bearing unit of second and half generation is configured basically the same as the bearing unit of third generation that has been described above, double row inner rings 16 are fitted on a hub main body 12. In this case, by deforming plastically a clamping area 12c and clamping (bringing into tight contact) the clamping area 12c against the inner ring 164 lying at a side facing the wheel, the double row inner rings 16 can be locked on the hub main body 12 with good efficiency.

This patent application is based on Japanese Patent Application (No. 2006-214744) filed on August 7, 2006, Japanese Patent Application (No. 2006-224553) filed on August 21, 2006, Japanese Patent Application (No. 2006-224554) filed on August 21, 2006, and Japanese Patent Application (No. 2006-226849) filed on August 23, 2006, and the contents thereof are all incorporated herein by reference.

## Claims

1. A bearing unit comprising:
a first raceway ring (2) which is mounted on a vehicle body;
a second raceway ring (4) which is disposed to face the first raceway ring (2) and is mounted on a wheel; and
a plurality of rolling elements (6, 8) which are disposed rollably between raceway surfaces (2s, 4s) which are formed, respectively, on facing surfaces (2n, 4m) of the first and second raceway rings (2, 4), wherein
the second raceway ring (4) has:
a raceway ring member (12) which has a radially projecting flange (12a); and
an inner ring (16) which is clamped to an axial end portion (12c) of the raceway ring member (12) so as to be locked on the raceway ring member (12),
the flange (12a) is formed monolithically with the raceway ring member (12) by performing a cold forging on a material (20) made of machine structural carbon steel without performing an annealing after the forging, and
a hardness of a root portion of the flange (12a) is set higher than a hardness of the axial end portion (12c) of the raceway ring member (12) before clamping.

2. The bearing unit as set forth in Claim 1, wherein
the hardness of the root portion of the flange (12a) is set higher by Vickers hardness HV50 or more than the hardness of the axial end portion (12c) of the raceway ring member (12) before clamping.

3. The bearing unit as set forth in Claim 1 or 2, wherein
the axial end portion (12c) of the raceway ring member (12) is formed monolithically by diametrically shrinking or expanding the material (20) through cold closed forging, and
the flange (12a) is formed monolithically by extruding the material (20) sideways through cold closed forging.
